# EUROPEAN PATENT APPLICATION

(11) **EP 4 629 418 A1**
(43) Date of publication of application: **08.10.2025**
(21) Application number: 23897303.6
(22) Date of filing: 20.10.2023
(51) Int. Cl.: H01M 50/213, H01M 50/291, H01M 50/293

(54) **BATTERY PACK**

(30) Priority: 30.11.2022 JP 2022192136
(71) Applicant: Panasonic Energy Co., Ltd., Osaka 570-8511 (JP)
(72) Inventor: NAMURA, Takashi, Osaka 571-0057 (JP)
(74) Representative: Eisenführ Speiser
(86) International application number: PCT/JP2023/038040
(87) International publication number: WO 2024/116646

(57) **Abstract**

A battery pack easily and reliably receives a plate in an insertion space in a partition wall between battery cells and holds the plate in position. The battery pack includes multiple battery cells (1), a battery holder (2) including a partition wall (22), and a heat-resistant plate (13) inside the partition wall (22). The partition wall (22) includes an insertion space (14) receiving the heat-resistant plate (13) between a pair of retaining walls (23). The retaining walls (23) include pressing protrusions (17) on their facing surfaces (16) facing the heat-resistant plate (13). **In** a cross section of the partition wall (22), the pressing protrusions (17) include a pair of first protrusions (17A) spaced from each other in a width direction on one of the facing surfaces, and a second protrusion (17B) located between the pair of first protrusions (17A) on the other of the facing surfaces. The heat-resistant plate (13) is held in position in the insertion space (14) with the heat-resistant plate (13) or the pressing protrusions (17) deforming elastically.

## Description

### FIELD

The present invention relates to a battery pack including multiple battery cells connected in series or in parallel to increase capacity.

### BACKGROUND

A battery pack including multiple battery cells accommodated in a case is used as a power supply for portable devices and cordless devices. In this battery pack, the multiple battery cells are connected in series or in parallel to increase capacity. In particular, recent battery packs are requested to have higher capacity, and also be smaller and lighter for portability and other purposes. Thus, battery cells each have higher capacity and are arranged without gaps between them in a battery pack.

The battery cells may have thermal runaway due to various causes such as an internal short circuit and overcharge. When any of multiple battery cells being arranged generates abnormal heat and ignites, adjacent battery cells may be heated and cause thermal runaway, which may propagate and cause thermal runaway of many battery cells. Thus, when any battery cell generates abnormal heat, the other battery cells are not to be affected by such heat.

In addition, a plastic holder is used in a battery pack to hold the battery cells in position. The holder is shaped to guide and place each battery cell in position. The holder, which holds the battery cells in position, cannot withstand the temperature of a battery cell with abnormal heat generation and can melt. The melted holder can no longer separate battery cells adjacent to the battery cell with abnormal heat generation and can cause fire spreading across the battery cells.

In response to this, the applicant has developed a battery pack accommodating multiple battery cells in a plastic holder that can avoid thermal runaway (refer to Patent Literature 1). This battery pack includes multiple battery cells and a holder holding the battery cells arranged parallel to each other. The holder includes, between adjacent battery cells, a partition wall that allows the battery cells to be in position. The partition wall includes facing surfaces facing the respective battery cells. The facing surfaces are integral with the holder and formed from a synthetic resin as resin molded layers shaped to allow the respective battery cells to be in position. The partition wall also includes an unmeltable plate inside to have a three-layer structure including the resin molded layers stacked on the unmeltable plate. This battery pack includes, between the resin molded layers in the holder, an insertion space for the unmeltable plate to be in position.

### CITATION LIST

### PATENT LITERATURE

Patent Literature 1: Re-publication of PCT International Publication No. WO 2019-208217

### BRIEF SUMMARY

### TECHNICAL PROBLEM

The battery pack described above holds the multiple battery cells in position using the holder and can avoid thermal runaway of the battery cells with the holder and the unmeltable plate. In particular, the holder for holding the multiple battery cells in position included in the above battery pack can effectively prevent thermal runaway and can be mass-produced inexpensively as a single plastic component.

For structures including a resin-molded holder having an insertion space for a plate such as a unmeltable plate in a partition wall, the size of the insertion space is difficult to adjust due to manufacturing errors in the shape of resin molded layers of the partition wall internally defining the insertion space and also manufacturing errors in the outer shape of the plate to be inserted into the insertion space. For the insertion space that is too narrow, inserting the plate may take time or the plate may not be inserted. For the insertion space that is too wide, the inserted plate may easily move through the insertion space without being held in position and may, for example, fall from the holder in the manufacturing process. For the holder with a smaller distance between adjacent battery cells, the insertion space to receive the plate is difficult to form due to the draft angle of a mold for forming the insertion space in the holder.

In response to the above issue, one or more aspects of the present invention are directed to a battery pack that includes a resin-molded holder accommodating multiple battery cells and easily and reliably receiving a plate in an insertion space in a partition wall between battery cells to hold the plate in position.

### SOLUTION TO PROBLEM

A battery pack according to an aspect of the present invention includes a plurality of battery cells, a battery holder holding the plurality of battery cells arranged parallel to each other and including a partition wall between adjacent battery cells of the plurality of battery cells, and a heat-resistant plate inside the partition wall of the battery holder and between adjacent battery cells of the plurality of battery cell. The partition wall includes a pair of retaining walls facing respective adjacent battery cells of the plurality of battery cells, and an insertion space receiving the heat-resistant plate in position between the pair of retaining walls. The pair of retaining walls have facing surfaces facing the heat-resistant plate received in the insertion space, and include pressing protrusions each pressing the heat-resistant plate on the facing surfaces. In a cross section of the partition wall, the pressing protrusions include a pair of first protrusions spaced from each other in a width direction on one of the facing surfaces, and a second protrusion located between the pair of first protrusions on the other of the facing surfaces. In the battery pack, the heat-resistant plate is held in position in the insertion space with the heat-resistant plate in the insertion space or the pressing protrusions deforming elastically to cause the pair of first protrusions and the second protrusion to press the heat-resistant plate from opposite sides of the heat-resistant plate

### ADVANTAGEOUS EFFECTS

The battery pack according to the above aspect of the present invention includes the resin-molded battery holder accommodating battery cells and easily and reliably receiving a plate in the insertion space in the partition wall between battery cells to hold the plate in position.

### BRIEF DESCRIPTION OF DRAWINGS

FIG. 1 is an external perspective view of a battery pack according to one embodiment of the present invention.
FIG. 2 is a perspective view of the battery pack in FIG. 1 in a manufacturing process.
FIG. 3 is an exploded perspective view of a battery assembly in the battery pack in FIG. 2.
FIG. 4 is an exploded perspective view of the battery assembly in FIG. 3 with a battery holder disassembled.
FIG. 5 is a sectional view of the battery assembly taken along line V-V in FIG. 2.
FIG. 6 is a partially enlarged sectional view of the battery assembly taken along line VI-VI in FIG. 5.
FIG. 7 is a partially enlarged sectional view of the battery assembly taken along line VII-VII in FIG. 5.
FIG. 8 is a partially enlarged longitudinal sectional view of an insertion space.
FIG. 9 is a partially enlarged horizontal sectional view of the insertion space.
FIG. 10 is an enlarged sectional view of an elastically deformable heat-resistant plate inserted into the insertion space.
FIG. 11 is an enlarged horizontal sectional view of a battery holder in a reference example with a plate inserted in the battery holder.
FIG. 12 is an enlarged sectional perspective view of the battery holder shown in FIG. 11.

### DETAILED DESCRIPTION

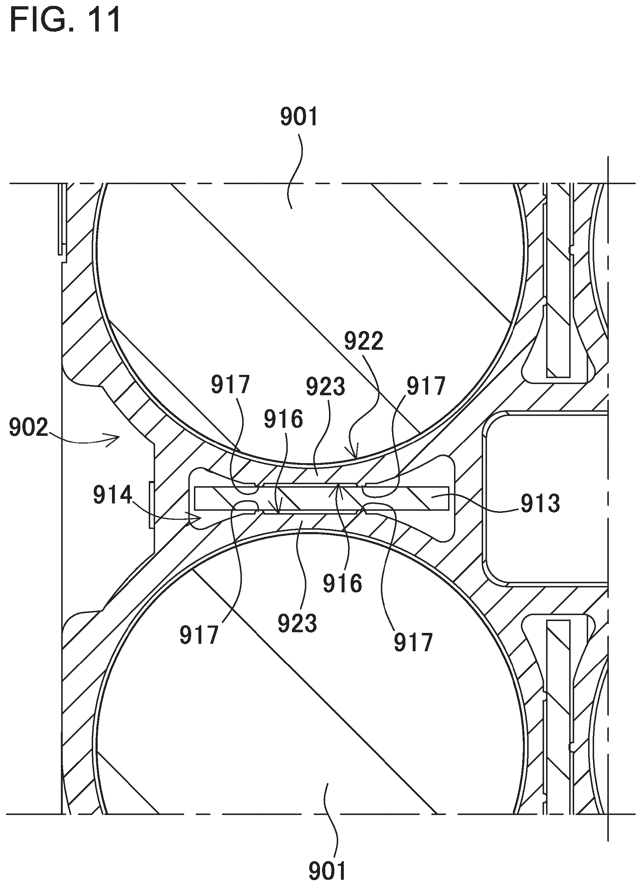

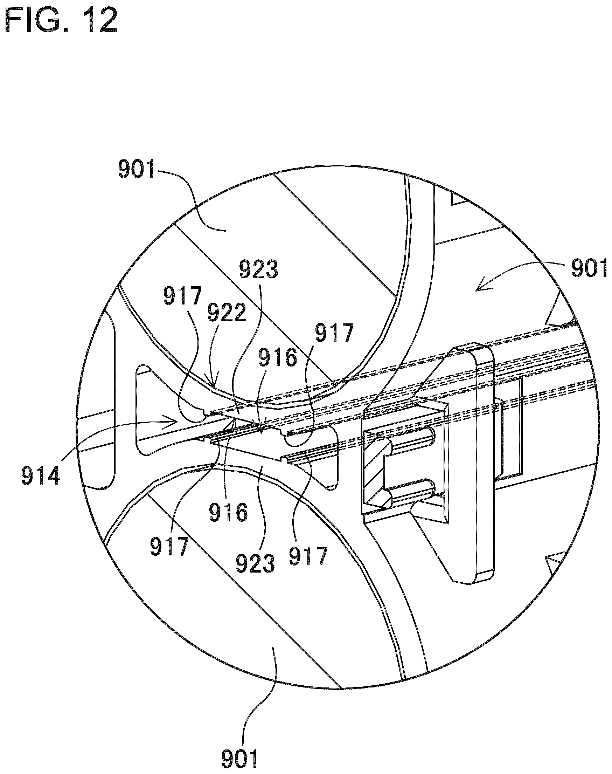

One feature in one or more embodiments of the present invention will be described first. For a battery holder accommodating multiple battery cells with an insertion space for receiving a plate with high thermal resistance and high insulation in a partition wall between battery cells, adjusting the size of the insertion space is difficult as described above. In response to the above issue, the inventor has prototyped a battery holder 902 with the structure shown in a reference example in FIGs. 11 and 12. The battery holder 902 shown in FIGs. 11 and 12 includes a partition wall 922 including a pair of retaining walls 923 between adjacent battery cells 901, and an insertion space 914 for receiving a plate 913 defined between the pair of retaining walls 923. The pair of retaining walls 923 include, on facing surfaces 916 facing the plate 913 received in the insertion space 914, multiple rows of ridges 917 extending in the longitudinal direction of the insertion space 914. The ridges 917 are in contact with the plate 913 to hold the plate 913. In a cross section of the partition wall 922, the multiple rows of ridges 917 include a pair of ridges 917 spaced from each other in the width direction on one of the facing surfaces 916 and a pair of ridges 917 spaced from each other in the width direction on the other of the facing surfaces 916. The ridges 917 facing each other hold the plate 913 between them at the same positions on opposite surfaces of the plate 913. In this structure, the ridges 917 protrude from the facing surfaces 916 of the pair of retaining walls 923 defining the insertion space 914 to hold the plate 913. Thus, the plate may be held more easily in this structure than in a structure including no ridge.

However, the structure shown in FIGs. 11 and 12 includes the ridges 917 supporting the plate 913 at the same positions on its opposite surfaces and thus involves difficult adjustment of the height of the ridges 917. In this structure as well, inserting the plate 913 may take time or the plate 913 may not be inserted when the distance between the ridges 917 facing each other is too short, or the inserted plate 913 may move through the insertion space 914 without being held in position and may, for example, fall from the battery holder 902 in the manufacturing process when the distance between the ridges 917 facing each other is too long. In response to the above, an optimum structure is to be defined for holding the plate received in the insertion space, and structures are to be explored to allow easy and smooth insertion of the plate in the insertion space and to securely hold the plate in position.

A battery pack according to an aspect of the present invention includes a plurality of battery cells, a battery holder holding the plurality of battery cells arranged parallel to each other and including a partition wall between adjacent battery cells of the plurality of battery cells, and a heat-resistant plate inside the partition wall of the battery holder and between adjacent battery cells of the plurality of battery cell. The partition wall includes a pair of retaining walls facing respective adjacent battery cells of the plurality of battery cells, and an insertion space receiving the heat-resistant plate in position between the pair of retaining walls. The pair of retaining walls have facing surfaces facing the heat-resistant plate received in the insertion space, and include pressing protrusions each pressing the heat-resistant plate on the facing surfaces. In a cross section of the partition wall, the pressing protrusions include a pair of first protrusions spaced from each other in a width direction on one of the facing surfaces, and a second protrusion located between the pair of first protrusions on the other of the facing surfaces. The heat-resistant plate is held in position in the insertion space with the heat-resistant plate in the insertion space or the pressing protrusions deforming elastically to cause the pair of first protrusions and the second protrusion to press the heat-resistant plate from opposite sides of the heat-resistant plate.

The battery pack according to the above aspect can easily and reliably receive the plate in the insertion space in the partition wall between battery cells and hold the plate in position. This is achieved with the features described below. The partition wall of the battery holder in the battery pack has the insertion space for receiving the heat-resistant plate in position between the pair of retaining walls facing the respective battery cells. The pair of retaining walls include the pressing protrusions on the facing surfaces facing the heat-resistant plate. In the cross section of the partition wall, the pressing protrusions include the pair of first protrusions spaced from each other in the width direction on one of the facing surfaces and the second protrusion located between the pair of first protrusions on the other of the facing surfaces The heat-resistant plate is held in position in the insertion space with the heat-resistant plate in the insertion space or the pressing protrusions deforming elastically to cause the pair of first protrusions and the second protrusion to press the heat-resistant plate from the opposite sides of the heat-resistant plate.

As described above, the structure includes the insertion space between the pair of retaining walls, the pair of first protrusions spaced from each other in the width direction on one of the facing surfaces defining the insertion space, and the second protrusion located between the pair of first protrusions on the other of the facing surfaces. **In** this structure, the first protrusions and the second protrusion do not face each other, and can thus press different positions on the heat-resistant plate from the opposite sides of the heat-resistant plate, instead of pressing the same positions on the heat-resistant plate from the opposite sides. Thus, when the first protrusions and the second protrusion protrude by a greater degree and have larger areas of interference with the heat-resistant plate, the elastically deformable heat-resistant plate or the pressing protrusions can accommodate the interference with the pressing protrusions and allow the heat-resistant plate to be easily and smoothly inserted. The heat-resistant plate inserted can be securely held in position with the first protrusions and the second protrusion pressing the heat-resistant plate from the opposite surfaces of the heat-resistant plate.

In a battery pack according to another aspect of the present invention, the battery holder may have the insertion space extending through the partition wall in a longitudinal direction of the plurality of the battery cells. The pressing protrusions on the facing surfaces may be located in a middle portion of the insertion space in a longitudinal direction of the insertion space. The insertion space may have an open end being an insertion opening through which the heat-resistant plate is received.

The above structure has the insertion space extending through the partition wall in the longitudinal direction of the battery cells and the open end of the insertion space being the insertion opening for the heat-resistant plate. This structure can easily and smoothly receive the heat-resistant plate and can also securely hold a middle portion of the heat-resistant plate with the pressing protrusions located in the middle portion of the insertion space.

In a battery pack according to another aspect of the present invention, the battery holder may include two divisional holders separated at a middle position of the plurality of battery cells in the longitudinal direction. One of the two divisional holders may include the insertion opening at one end of the insertion space and the pressing protrusions at another end of the insertion space.

In the above structure, the battery holder includes the two divisional holders, and the pressing protrusions are located in the insertion space in one of the divisional holders alone. The battery holder thus has a simple structure.

In a battery pack according to another aspect of the present invention, the insertion space may include a holding space in which the pressing protrusions are located and enlarged spaces on opposite sides of the holding space. The enlarged spaces may be wider than the holding space. The holding space may have a narrower lateral width than the heat-resistant plate. The heat-resistant plate may include opposite end portions received in the enlarged spaces.

In the above structure, the insertion space in the partition wall includes the enlarged spaces wider than the holding space on the opposite sides of the holding space in which the pressing protrusions are located. **In** inserting the elastically deformable heat-resistant plate into the insertion space, this structure deforms the heat-resistant plate to curve in the lateral width direction, and guides the opposite end portions of the heat-resistant plate to elastically deform into a curved shape to the enlarged spaces for efficient insertion.

In a battery pack according to another aspect of the present invention, each of the pair of first protrusions and the second protrusion may include a slope being lower toward the insertion opening.

In the above structure, each of the pair of first protrusions on one of the facing surfaces and the second protrusion on the other of the facing surfaces includes the slope being lower toward the insertion opening. This structure allows an end of the heat-resistant plate inserted first through the insertion opening to be smoothly guided to a position between the pair of first protrusions and the second protrusion along the slopes.

In a battery pack according to another aspect of the present invention, the pair of first protrusions may be ridges extending in the longitudinal direction of the insertion space. Each of the ridges may include a slope being lower toward the insertion opening.

In the above structure, the pair of first protrusions on one of the facing surfaces in the insertion space are ridges extending in the longitudinal direction of an insertion cylinder, and each of the ridges includes the slope being lower toward the insertion opening. This structure allows the heat-resistant plate inserted through the insertion opening to be inserted smoothly with low resistance with the pair of ridges serving as guides. **In** particular, the end of the heat-resistant plate inserted into the insertion space first moves along the slopes of the ridges, allowing the heat-resistant plate to be smoothly guided to the upper surfaces of the ridges.

One or more embodiments of the present invention will now be described with reference to the drawings. One or more embodiments described below merely embody the technical idea of the present invention, and the present invention is not limited to the embodiments described below. The components specified in the claims are not limited to the components described in one or more embodiments. In particular, the dimensions, materials, shapes, and relative positions of the components described in one or more embodiments are mere examples and are not intended to limit the scope of the present invention, unless otherwise specified. The sizes and the positional relationships of the components shown in the drawings may be exaggerated for clarity. The same names and the same reference numerals below denote the same or similar components, which may not be described in detail. For elements that constitute one or more aspects of the present invention, multiple elements may be formed by a single component that serves as these multiple elements, or the function(s) of a single element may be implemented by multiple components.

A battery pack according to one or more embodiments of the present invention may be used as, for example, a power supply for electrical devices such as speakers, vacuum cleaners, and power tools, a power supply for server backup as a stationary power storage or a power supply device for household use, business use, and factory use, a power supply for driving assisted bicycles, and a power supply for driving vehicles such as electric scooters, electric carts, hybrid vehicles, and electric vehicles. A battery pack according to one embodiment of the present invention used as a power supply for wireless speakers will now be described.

### First Embodiment

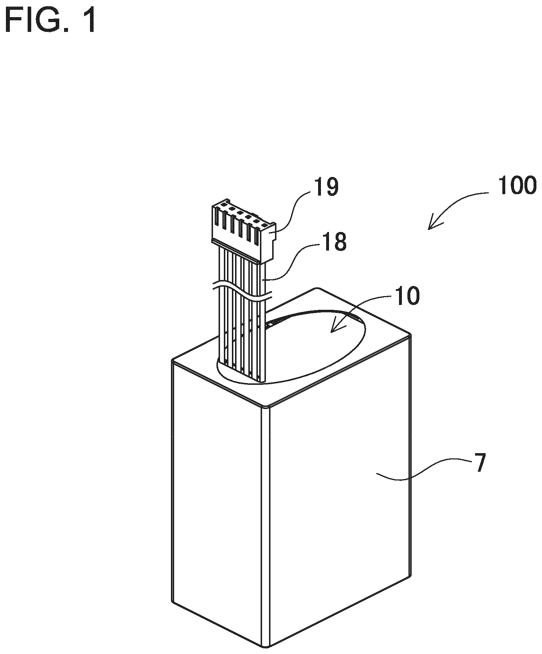

FIGs. 1 to 9 show a battery pack 100 according to a first embodiment of the present invention.

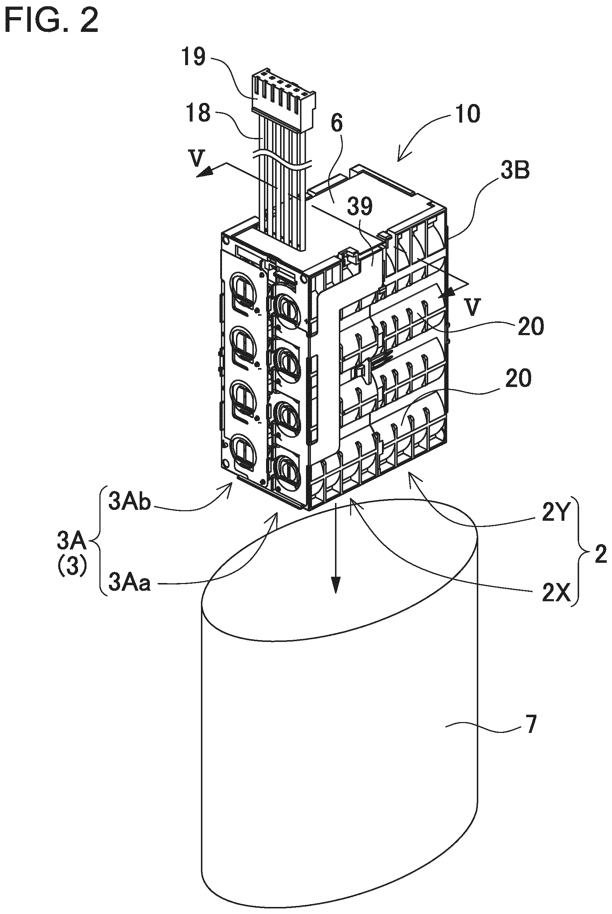

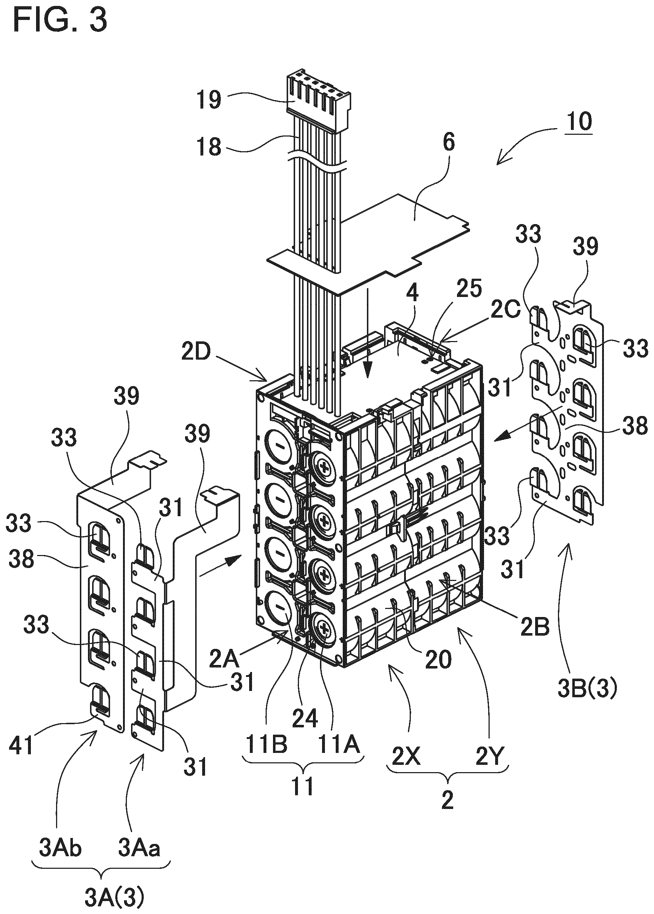

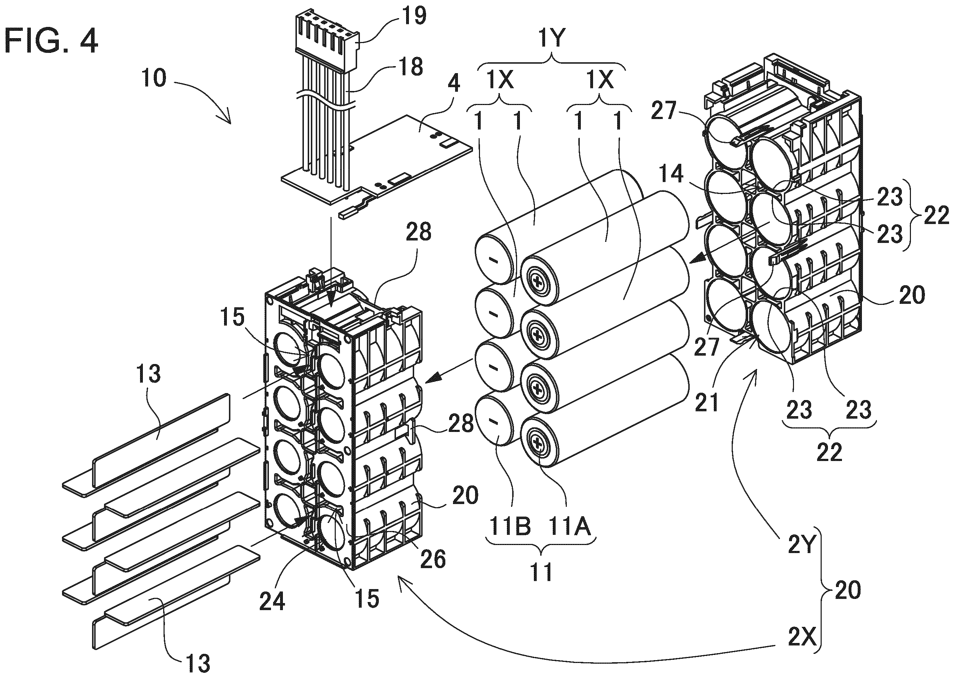

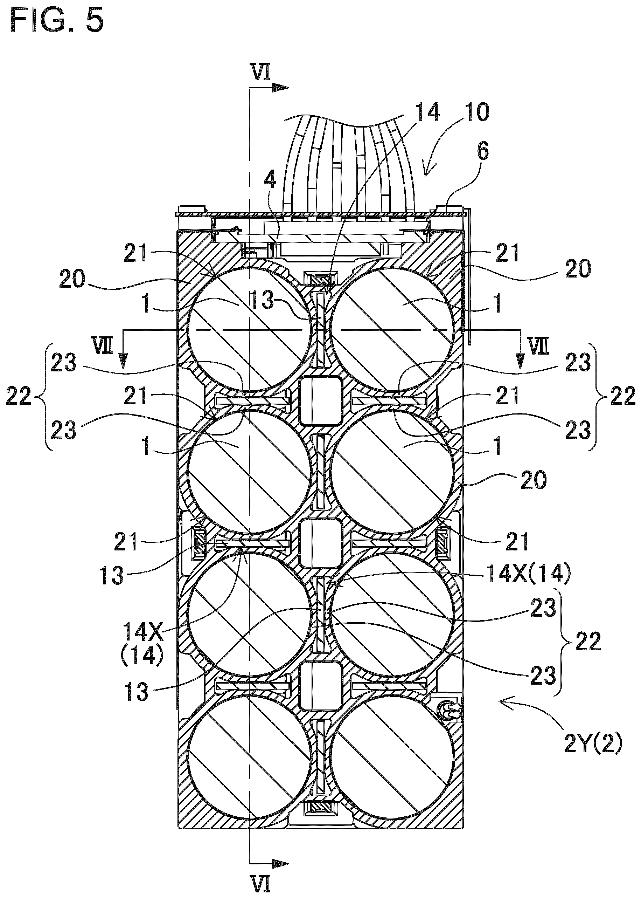

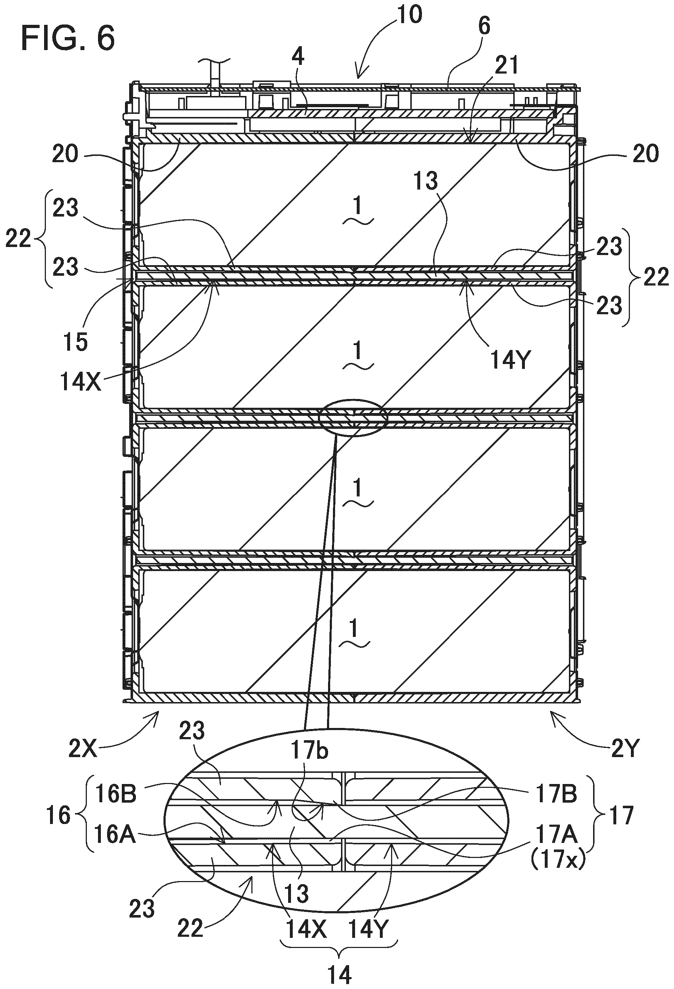

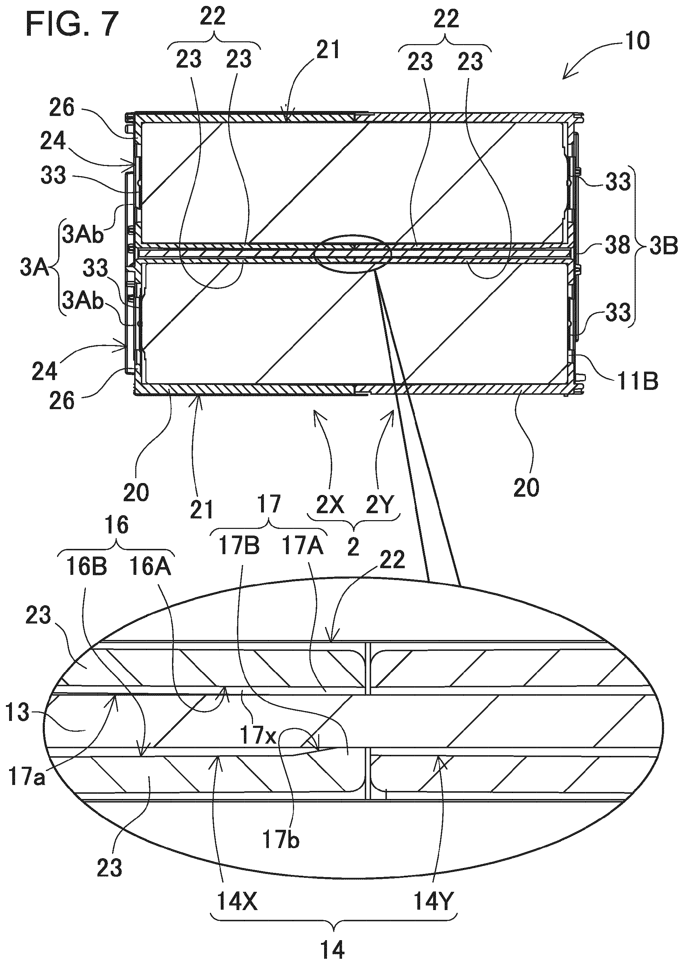

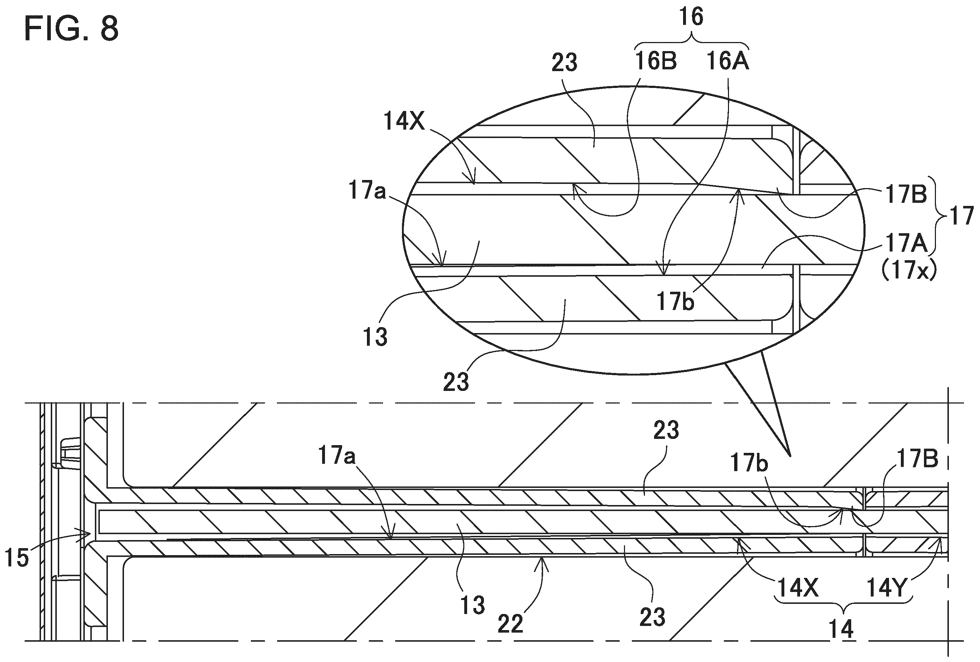

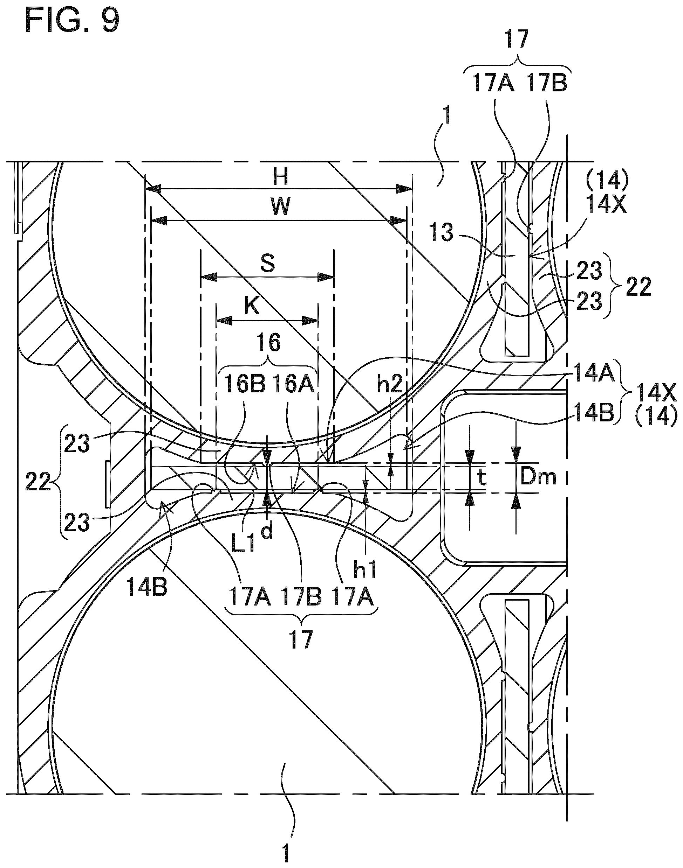

FIG. 1 is an external perspective view of the battery pack. FIG. 2 is a perspective view of the battery pack in FIG. 1 in its manufacturing process. FIG. 3 is an exploded perspective view of a battery assembly in FIG. 2 with lead plates being removed. FIG. 4 is an exploded perspective view of the battery assembly in FIG. 3 with a battery holder disassembled. FIG. 5 is a sectional view of the battery assembly taken along line V-V in FIG. 2. FIGs. 6 and 7 are sectional views of the battery assembly respectively taken along lines VI-VI and VII-VII in FIG. 5. FIG. 8 is a partially enlarged longitudinal sectional view of an insertion space. FIG. 9 is a partially enlarged horizontal sectional view of the insertion space.

The battery pack 100 shown in the figures includes multiple battery cells 1, a battery holder 2 holding the battery cells 1 in position parallel to each other and including partition walls 22 between adjacent battery cells, and heat-resistant plates 13 received inside the partition walls 22 of the battery holder 2 to be between adjacent battery cells 1.

### Battery Assembly 10

The battery pack 100 shown in FIGs. 1 to 7 includes a battery assembly 10 obtained by arranging the multiple battery cells 1 parallel to each other in the battery holder 2 to be in position, inserting the heat-resistant plates 13 into the inside of the partition walls 22 between adjacent battery cells 1 to be in position, fastening lead plates 3 to opposite end faces of the battery holder 2, and placing a circuit board 4 on an upper portion of the battery holder 2. The battery assembly 10 has an upper surface covered with an insulator 6 and a surface covered with an exterior sheet 7.

### Battery Cell 1

The battery cells 1 may be cylindrical battery cells each including a cylindrical exterior can. For example, the battery cells 1 are obtained by placing an electrode body in a cylindrical metal exterior can, filling the exterior can with an electrolyte, and hermetically sealing an opening in the exterior can with a sealing plate. Each battery cell 1 includes end face electrodes 11 on its opposite ends in the longitudinal direction. Each battery cell 1 has, as its opposite end faces, the bottom surface of the exterior can and the sealing plate, and includes, as positive and negative electrodes, electrodes on the bottom surface of the exterior can and a central portion of the sealing plate. Each battery cell 1 in the figures includes one end face electrode 11 as a first electrode 11A that is a protruding electrode on the central portion of the sealing plate, and the other end face electrode 11 as a second electrode 11B located on the bottom surface of the exterior can.

The battery cells 1 described above may be non-aqueous electrolytic secondary batteries with high energy efficiency, or for example, lithium-ion secondary batteries. However, the battery pack according to one or more embodiments of the present invention may include battery cells other than lithium-ion secondary batteries. The battery cells may be any rechargeable batteries including, for example, nickel-metal hydride batteries and nickelcadmium batteries.

### Battery Holder 2

The battery holder 2 holds the multiple battery cells 1 in position. The battery holder 2 includes holding cylinders 20 accommodating the battery cells 1 and covering the outer circumferential surfaces of the battery cells 1. The battery holder 2 in the figures includes multiple holding cylinders 20 accommodating the multiple battery cells 1 parallel to each other. The battery holder 2 in the figures holds the multiple battery cells 1 to be parallel to each other in the longitudinal direction and also to cause the end face electrodes 11 on each end face to be on the same plane. The battery holder 2 is formed from a resin and shaped to include the multiple holding cylinders 20 joined together. The battery holder 2 may be formed from a material with high insulation, high thermal resistance, and high flame retardancy. The battery holder 2 is formed from, for example, a resin such as polycarbonate or acrylonitrile butadiene styrene (ABS).

The battery holder 2 in the figures has an outer shape of a box and holds the multiple battery cells 1 arranged in multiple stages and multiple rows. The battery holder 2 accommodating the multiple battery cells 1 in multiple stages and multiple rows is shaped to include the multiple holding cylinders 20 joined together in multiple stages and multiple rows. Further, the battery holder 2 includes the partition walls 22 between battery cells 1 accommodated to be adjacent to each other. As shown in the figures, the battery holder 2, which accommodates the multiple battery cells 1 in multiple stages and multiple rows, includes the partition walls 22 between adjacent battery cells 1 and its outer surface defined by the holding cylinders 20. As shown in FIG. 3, in the battery holder 2, the end face electrodes 11 in the battery cells 1 are aligned with either a first surface 2A or a third surface 2C of the battery holder 2 having the outer shape of a box.

The battery holder 2 shown in FIGs. 4 and 5 is shaped to include eight holding cylinders 20 joined parallel to each other in four stages and two rows. The battery holder 2 includes battery compartments 21 that are the internal spaces of the holding cylinders 20 with a shape that is substantially the same as the outer shape of the battery cells 1. The battery holder 2 shown in the figures holds eight battery cells 1 arranged in four stages and two rows. The battery cells 1 are thus arranged vertically and laterally in the figures. **In** the battery holder 2 in the figures, the eight battery cells 1 are arranged in a matrix to be bilaterally symmetric to each other as viewed from the front. This structure can stably maintain the battery holder 2 holding the battery cells 1 arranged in multiple stages in an upright orientation. The number of battery cells 1 and the arrangement of the battery cells 1 are not limited to the above structure. The structure may include seven or fewer battery cells 1 or nine or more battery cells 1. The battery cells 1 may be arranged in a staggered arrangement to alternate with each other in each stage, rather than being arranged in a matrix. Although the battery pack 100 shown in the figures includes the eight battery cells 1 arranged in two rows in the horizontal direction and stacked in four stages in the vertical direction, the battery pack may include multiple battery cells in any arrangement and may be installed in any orientation.

In the battery holder 2 in the figures, the battery cells 1 are arranged in four stages and two rows. The battery holder 2 thus includes the partition walls 22 in a cross shape vertically between the eight battery cells 1 arranged vertically and laterally. Each partition wall 22 has an insertion space 14 inside for receiving the corresponding heat-resistant plate 13. The battery block 10 can prevent thermal runaway in adjacent battery cells 1 when any of the battery cells 1 has thermal runaway and generates abnormal heat.

The battery holder 2 in FIG. 4 is separated into two divisional holders including a first divisional holder 2X and a second divisional holder 2Y in the longitudinal direction of the battery cells 1. Each of the first divisional holder 2X and the second divisional holder 2Y includes separated holding cylinders 20 each having one end integral with an end face plate 26 and the other end being an opening. The battery holder 2 in the figure includes the battery compartments 21 accommodating the battery cells 1. The battery compartments 21 are defined by the first divisional holder 2X and the second divisional holder 2Y joined together at the openings. The first divisional holder 2X and the second divisional holder 2Y include the cylindrical battery compartments 21 to receive and hold the cylindrical battery cells 1 in position. The battery compartments 21 have an inner shape that is substantially the same as the outer shape of the battery cells 1, or more specifically, that is slightly larger to smoothly receive and hold the battery cells 1 in position. The battery holder 2 can smoothly receive the elongated battery cells 1. The first divisional holder 2X and the second divisional holder 2Y are separately formed by resin molding, receive the battery cells 1, and are joined together. The first divisional holder 2X and the second divisional holder 2Y with this structure are joined together in position with the battery cells 1 having opposite end portions received in the first divisional holder 2X and the second divisional holder 2Y.

Further, the first divisional holder 2X and the second divisional holder 2Y are joined with engagement components. The second divisional holder 2Y in FIG. 4 integrally includes engagement hooks 27 extending outward from the holding cylinders 20 in the axial direction on middle portions of a second surface 2B and a fourth surface 2D that are opposite side surfaces and on middle portions of the upper surface and the lower surface. The first divisional holder 2X includes engagement portions 28 that guide the engagement hooks 27 at positions at which the engagement portions 28 face the respective engagement hooks 27. With the engagement hooks 27 coupled to the engagement portions 28, the first divisional holder 2X and the second divisional holder 2Y are joined not to separate.

### Heat-resistant Plate 13

In the battery assembly 10 shown in FIGs. 4 to 7, the heat-resistant plates 13 are arranged inside the partition walls 22 between adjacent battery cells 1. The heat-resistant plates 13 are plates that are not deformable at a temperature reached by any battery cell 1 with abnormal heat generation, and may be inorganic plates such as mica plates. The inorganic plates may each be inorganic powder sintered or molded into a plate, a plate-like inorganic material, or inorganic fibers molded into a plate, in place of a mica plate. The heat-resistant plates are formed from an insulating material to prevent a short circuit between adjacent battery cells when the resin in the battery holder melts due to any battery cell 1 with abnormal heat generation. Thus, the heat-resistant plates 13 may also be, for example, aramid resin sheets or ceramic plates. The heat-resistant plates 13 are plates that are slightly thinner than the insertion spaces 14 to be arranged in the insertion spaces 14 in a removable manner.

### Partition Wall 22 and Insertion Space 14

Each partition wall 22 includes a pair of retaining walls 23 each facing an adjacent battery cell 1 and the insertion space 14 for receiving the corresponding heat-resistant plate 13 in position between the pair of retaining walls 23. With the heat-resistant plate 13 located between the pair of retaining walls 23, the partition wall 22 has a three-layer structure including the heat-resistant plate 13 and the retaining walls 23. The partition wall 22 has the retaining walls 23 stacked to face opposite surfaces of the heat-resistant plate 13 inside the partition wall 22. The retaining walls 23 each have a surface curved along the surface of the corresponding cylindrical battery cell 1, allowing the battery cells 1 to be in position. The battery holder 2 shown in FIGs. 4, 6, and 7 is separated into the first divisional holder 2X and the second divisional holder 2Y in the longitudinal direction of the battery cells 1. Thus, the insertion spaces 14 defined in the partition walls 22 of the battery holder 2 are also each separated into a first insertion space 14X defined in the first divisional holder 2X and a second insertion space 14Y defined in the second divisional holder 2Y. The first insertion space 14X and the second insertion space 14Y are defined in the partition walls 22 in the first divisional holder 2X and the second divisional holder 2Y facing each other. With the first divisional holder 2X and the second divisional holder 2Y being joined, the first insertion space 14X and the second insertion space 14Y are linearly aligned to define the insertion space 14 for receiving the heat-resistant plate 13. More specifically, with the first divisional holder 2X and the second divisional holder 2Y being joined, the insertion spaces 14 in the battery holder 2 are each defined by the first insertion space 14X and the second insertion space 14Y to have a total length to accommodate the entire heat-resistant plate 13. In addition, each insertion space 14 has an inner width (H) and a minimum distance (Dm) determined based on the lateral width (W) and the thickness (t) of the heat-resistant plate 13 to be inserted as shown in FIG. 9.

### Pressing Protrusion 17

To hold the heat-resistant plates 13 received in the insertion spaces 14 in position, each pair of retaining walls 23 integrally include, on facing surfaces 16 facing the heat-resistant plate 13, pressing protrusions 17 each pressing the heat-resistant plate 13. As shown in the enlarged cross-sectional view in FIG. 9, the pressing protrusions 17 include a pair of first protrusions 17A and a second protrusion 17B. In a cross section of the partition wall 22, the pair of first protrusions 17A are spaced from each other in the width direction on a first facing surface 16A that is one of the facing surfaces, and the second protrusion 17B is located between the pair of first protrusions 17A on a second facing surface 16B that is the other of the facing surfaces.

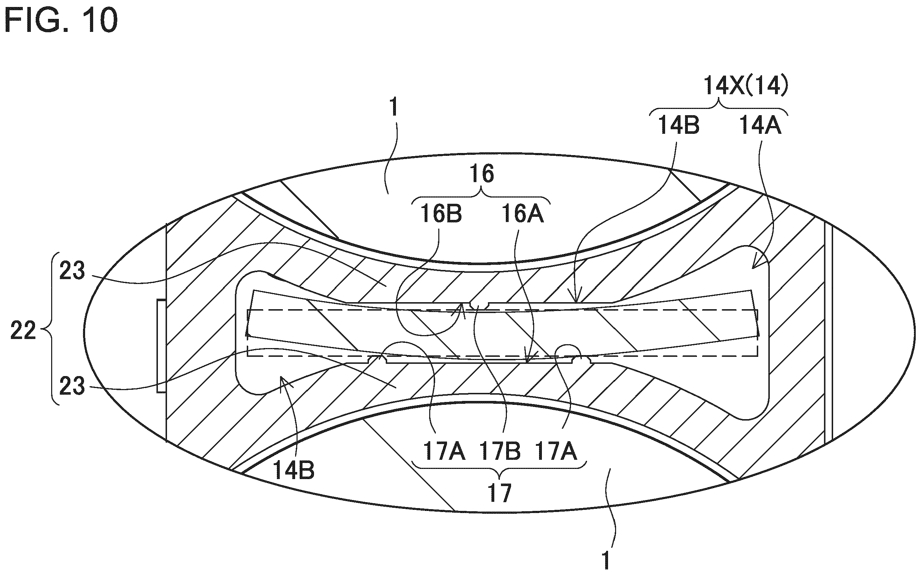

In this structure in which the pair of first protrusions 17A on the first facing surface 16A and the second protrusion 17B located between the pair of first protrusions 17A on the second facing surface 16B support the heat-resistant plate 13, the first protrusions 17A and the second protrusion 17B do not face each other, and can thus press different positions on the heat-resistant plate 13 from opposite sides of heat-resistant plate 13. Thus, when the first protrusions 17A and the second protrusion 17B protrude by a greater degree, the heat-resistant plate 13 can be easily and smoothly inserted while the interference between the heat-resistant plate 13 and the pressing protrusions 17 is being accommodated. This is because when the heat-resistant plate 13 is elastically deformable, the heat-resistant plate 13 can be inserted into the insertion space 14 while curving in the width direction to reduce the interference with the pressing protrusions 17 as shown in FIG. 10 or because the first protrusions 17A and the second protrusion 17B facing the heat-resistant plate 13 press the different positions on the opposite surfaces of the heat-resistant plate 13 and thus elastically deform effectively to accommodate the interference with the heat-resistant plate 13. Thus, in this structure, the heat-resistant plate 13 can be easily and smoothly inserted with the heat-resistant plate 13 or the pressing protrusions 17 that are elastically deformable, and the heat-resistant plate 13 received can be securely held in position with the first protrusions 17A and the second protrusion 17B pressing the heat-resistant plate 13 from the opposite surfaces of the heat-resistant plate 13.

In the battery holder 2 shown in FIGs. 6 and 7, each insertion space 14 extends through the corresponding partition wall 22 in the longitudinal direction of the battery cells 1, the pressing protrusions 17 on the facing surfaces 16 of each pair of retaining walls 23 are located in a middle portion of the corresponding insertion space 14 in the longitudinal direction of the entire insertion space 14 defined by the first insertion space 14X and the second insertion space 14Y, and each insertion space 14 has one open end serving as an insertion opening 15 through which the corresponding heat-resistant plate 13 is inserted. The battery holder 2 shown in FIGs. 6 and 7 is separated in the longitudinal direction, and includes the insertion opening 15 at one end of each of the first insertion spaces 14X in the first divisional holder 2X, which is one of the divisional holders, and the pressing protrusions 17 at the other end. In this structure, no pressing protrusions 17 are in the second insertion spaces 14Y in the second divisional holder 2Y, which is the other divisional holder, and the second insertion spaces 14Y are through-holes uniformly extending through the partition walls 22. The pressing protrusions 17 may be in the middle portion of each insertion space 14 for a draft angle to be provided in molds to form the insertion space 14 in the battery holder 2. More specifically, the molds to form the insertion space 14 in the battery holder 2 are inserted through opposite ends of the first divisional holder 2X and the second divisional holder 2Y in the longitudinal direction of the battery cells 1, allowing the pressing protrusions 17 to be easily formed in the middle portion of the insertion space 14. In particular, the first divisional holder 2X is molded with each insertion opening 15 to insert the mold (and remove the mold after molding). Thus, in the structure including the pressing protrusions 17 at the end opposite to the insertion opening 15, slopes (described later) may also be formed.

As shown in FIGs. 6 to 8, the pair of first protrusions 17A on each first facing surface 16A are ridges 17x extending in the longitudinal direction of the insertion spaces 14. The ridges 17x extend from an open end of the first insertion space 14X to an intermediate portion of the first insertion space 14X. The ridges 17x each include a slope 17a being lower toward the insertion opening 15. In other words, the pair of first protrusions 17A are not located at the insertion opening 15, and are located near a joint between the first divisional holder 2X and the second divisional holder 2Y and at a middle portion of the entire battery holder 2. This structure allows each of the heat-resistant plates 13 inserted through the corresponding insertion opening 15 to be inserted smoothly with low resistance with a pair of ridges 17x serving as guides. In particular, an end of the heat-resistant plate 13 inserted into the insertion space 14 first through the insertion opening 15 moves along the slopes 17a of the ridges 17x, allowing the heat-resistant plate 13 to be smoothly guided to the upper surfaces of the ridges 17x. Each pair of first protrusions 17A have a distance (K) between them that is 1/5 to 4/5, or specifically, 1/4 to 3/4, of the lateral width (W) of the heat-resistant plates 13 to stably support the corresponding heat-resistant plate 13.

As shown in FIGs. 6 to 8, the second protrusion 17B on each second facing surface 16B is not a ridge extending in the longitudinal direction unlike the first protrusions 17A, and is a rib with a short total length. The second protrusion 17B shown in the figures is substantially triangular as viewed laterally, and includes a slope 17b being lower toward the insertion opening 15. The second protrusion 17B with this shape, which has a maximum height at one vertex of the triangle, allows the heat-resistant plate to slide with low resistance and can also press and hold the heat-resistant plate securely. In particular, the end of the heat-resistant plate 13 moves along the slopes 17a of the first protrusions 17A and the slope 17b of the second protrusion 17B, allowing the heat-resistant plate 13 to be smoothly guided to a position between the pair of first protrusions 17A and the second protrusion 17B. Although the pressing protrusions 17 shown in FIG. 9 include the single second protrusion 17B opposite to the middle between the pair of first protrusions 17A, the pressing protrusions 17 may include multiple second protrusions. In this case as well, the multiple second protrusions are arranged between the pair of first protrusions, do not face the first protrusions, and may be bilaterally symmetric to each other.

Although not shown, the second protrusion may be a ridge extending in the longitudinal direction with a slope adjacent to the insertion opening. In this case as well, the second protrusion may be shorter than the first protrusions. The first protrusions may be ribs with a short total length similarly to the second protrusion. In this case as well, the first protrusions may each have a slope adjacent to the insertion opening to allow the heat-resistant plate to be smoothly inserted.

The insertion spaces 14 shown in FIG. 9 each include a holding space 14A in which the pressing protrusions 17 are located and enlarged spaces 14B on opposite sides of the holding space 14A. The enlarged spaces 14B are wider than the holding space 14A. The holding space 14A has a lateral width (S) narrower than the lateral width (W) of the heat-resistant plate 13. The heat-resistant plate 13 thus includes opposite end portions received in the enlarged spaces 14B. The insertion space 14 described above includes the enlarged spaces 14B wider than the holding space 14A on the opposite sides of the holding space 14Ain which the pressing protrusions 17 are located. In inserting the heat-resistant plate 13 that is elastically deformable into the insertion space 14, this structure deforms the heat-resistant plate 13 to curve in the lateral width direction as shown in FIG. 10 and guides the opposite end portions of the heat-resistant plate 13 to elastically deform into a curved shape to the enlarged spaces 14B for efficient insertion.

The insertion space 14 with the above structure is designed to have the minimum distance (Dm) between the first facing surface 16A and the second facing surface 16B greater than the thickness (t) of the heat-resistant plate 13. The insertion space 14 is also designed to have a distance (d) between a first line L1 connecting the tips of the pair of first protrusions 17A and the tip of the second protrusion 17B smaller than the thickness (t) of the heat-resistant plate 13 when the heat-resistant plate 13 is not inserted. Thus, the first protrusions 17A and the second protrusion 17B have heights (h1 and h2) designed to satisfy the above conditions. The first protrusions 17A and the second protrusion 17B may have their heights (h1 and h2) determined based on the amounts of their elastic deformation, and may each have a cross section changed to an optimal shape. In the insertion space 14 with the above structure, the distance (d) that is a substantial distance between the tips of the pair of first protrusions 17A and the tip of the second protrusion 17B is smaller than the thickness (t) of the heat-resistant plate 13. Although this increases the areas of interference between the pressing protrusions 17 and the heat-resistant plate 13 in inserting the heat-resistant plate 13, the heat-resistant plate 13 or the pressing protrusions 17 deform elastically, thus allowing the heat-resistant plate 13 to be inserted effortlessly while the interference is being accommodated. The heat-resistant plate 13 received can be held in position with the first protrusions 17A and the second protrusion 17B elastically pressing the heat-resistant plate 13 from the opposite surfaces of the heat-resistant plate 13. This structure allows the heat-resistant plate 13 to be smoothly inserted between the first facing surface 16A and the second facing surface 16B without being stuck, and also allows the first protrusions 17A and the second protrusion 17B to be in contact with the opposite surfaces of the heat-resistant plate 13 and securely hold the heat-resistant plate 13 without allowing the heat-resistant plate 13 to move through between the pair of first protrusions 17A and the second protrusion 17B.

The battery holder 2 includes connection windows 24 for causing the end face electrodes 11 to be exposed and connected to one of the lead plates 3. The connection windows 24 are open in the end face plates 26 facing the end face electrodes 11 in the battery cells 1. The connection windows 24 that guide the first electrodes 11A, which are protruding electrodes, are larger than the outer shape of the protruding electrodes and can receive the protruding electrodes inside. These connection windows 24 receive the protruding electrodes inside and allow the protruding electrodes to be welded to the lead plates 3. The lead plates 3 can thus be welded to the first electrodes 11A with smaller steps between the lead plates 3 and the first electrodes 11A exposed through the connection windows 24. The connection windows 24 facing the second electrodes 11B that are the bottom surfaces of the exterior cans are open to be large enough to guide welds 33 in the lead plates 3 to the second electrodes 11B.

The battery holder 2 further includes an accommodation area 25 accommodating the circuit board 4 on its upper portion. The battery holder 2 shown in FIG. 3 includes front, rear, left, and right peripheral walls extending upward beyond its upper surface, and has, on the inner sides of the four peripheral walls, recesses defining the accommodation area 25 for the circuit board 4. In the battery holder 2 in FIG. 5, the circuit board 4 is located in the accommodation area 25 with a space left between the circuit board 4 and the bottom of the accommodation area 25. The circuit board 4 in FIG. 3 has an outer shape with an outer periphery fittable to the inner periphery of the accommodation area 25 and is located in position. The circuit board 4 is engaged with tabs on the peripheral walls and thus prevented from moving upward. The circuit board may be directly fastened to the battery holder 2 with, for example, screws in an installation area for the circuit board, or the battery holder 2 may additionally include a board holder for holding the circuit board.

### Lead Plate 3

In the battery pack 100 shown in the figures, the end face electrodes 11 on the opposite ends of the multiple battery cells 1 held in position by the battery holder 2 are connected to each other with the lead plates 3. The lead plates 3 are highly conductive pressed metal plates. The lead plates 3 are welded to and fixed to the end face electrodes 11 on the end faces of the battery cells 1 in the battery holder 2. The battery assembly 10 shown in FIGs. 2 and 3 includes eight battery cells 1 connected in series and in parallel with the lead plates 3. The battery assembly 10 in FIG. 4 includes a battery block 1Y. The battery block 1Y includes parallel units 1X laterally arranged in two rows. Each parallel unit 1X includes four battery cells 1 that are vertically arranged in four stages and connected to each other in parallel. The parallel units 1X arranged laterally are connected to each other in series. The battery block 1Y thus includes eight battery cells 1 including four in parallel and two in series. In the battery assembly 10, the two parallel units 1X are connected in series with an intermediate lead plate 3B on the third surface 2C of the box-shaped battery holder 2 as shown in FIG. 3, and the parallel units 1X connected in series have their output ends connected to an output lead plate 3A on the first surface 2A of the battery holder 2 as shown in FIGs. 2 and 3.

The output lead plate 3Aincludes, near an output end of the battery block 1Y, a first output lead plate 3Aa connecting the first electrodes 11Ain the multiple battery cells 1 included in one of the parallel units 1X to each other and a second output lead plate 3Ab connecting the second electrodes 11B to each other. The first output lead plate 3Aa shown in FIG. 3 is located on a right portion of the first surface 2A of the battery holder 2 having the outer shape of a box, and connected to the vertically adjacent first electrodes 11A. The first output lead plate 3Aa shown in FIG. 3 is shaped to include stack portions 31 and the welds 33 alternately joined. The stack portions 31 are stacked on the surfaces of opening edges of the connection windows 24 that serve as the surface of the battery holder 2. The welds 33 are stepped to be lower than the stack portions 31. The welds 33 are connected to the first electrodes 11A received by the connection windows 24. The first output lead plate 3Aa is formed, by bending, to have a shape of a substantially square wave formed by the stack portions 31 and the welds 33 alternately joined in a longitudinal cross section. The first output lead plate 3Aa connects the first electrodes 11A in the four battery cells 1 to each other. The first output lead plate 3Aa thus includes four welds 33 vertically and the stack portions 31 between and outward from the welds 33.

The intermediate lead plate 3B includes a plate-like stack portion 38 located substantially entirely on the third surface 2C of the battery holder 2. The plate-like stack portion 38 is connected to the end face electrodes 11 in the vertically and laterally adjacent battery cells 1. The intermediate lead plate 3B connects the vertically adjacent battery cells 1 in parallel and the laterally adjacent battery cells 1 in series with the plate-like stack portion 38 on the third surface 2C of the battery holder 2. The intermediate lead plate 3B includes the welds 33 welded to the end face electrodes in the battery cells 1 in the plate-like stack portion 38. These welds 33 are each raised from the plate-like stack portion 38. For any elevation difference between the surface of the battery holder 2 and the surfaces of the end face electrodes 11, the welds 33 are thus in surface contact with the surfaces of the end face electrodes 11, increasing the welding reliability. In the present embodiment, the intermediate lead plate 3B connects the laterally adjacent battery cells 1 in series. Thus, a portion of the plate-like stack portion 38 that allows the series connection is flat with no step.

The second output lead plate 3Ab also includes welds 33 connected to the second electrodes 11B in a plate-like stack portion 38 connecting the second electrodes 11B in the adjacent battery cells 1. In the second output lead plate 3Ab and the intermediate lead plate 3B, the welds 33 connected to the second electrodes 11B are joined to the plate-like stack portions 38 with elongated extending fuses 41. The fuses 41 are fused when an overcurrent flows, thus reliably disconnecting the battery cells 1 from the lead plates 3.

The lead plates 3 include connection terminals 39 for connection to the circuit board 4 protruding upward. The connection terminals 39 extending from the output lead plate 3A are connected to the circuit board 4 to provide an output of the battery block 1Y to the circuit board 4. The connection terminal 39 extending from the intermediate lead plate 3B is connected to the circuit board 4 to provide an intermediate voltage of the battery block 1Y to the circuit board 4.

### Circuit Board 4

On the circuit board 4, electronic circuits are mounted such as a voltage detection circuit that detects a total potential of the battery block 1Y including the battery cells 1 connected in series or in parallel or an intermediate potential, a control circuit that controls charging and discharging, and a protection circuit. The circuit board 4 is rectangular and located in the accommodation area 25 on the upper portion of the battery holder 2.

### Insulating Sheet

Although not shown, the battery pack may include insulating plates that are stacked on the surfaces of the lead plates 3 fixed to the battery holder 2 and cover and insulate the lead plates 3. The insulating plates may be formed from a resin or paper for low cost and easy handling and have high thermal resistance and high flame retardancy to heat generated from a discharged substance such as a gas discharged from the battery cells 1. The insulating plates may be formed from, for example, aramid paper (Nomex (registered trademark) manufactured by DuPont de Nemours, Inc.). The insulating plates described above may include, for example, a first insulating plate that is located on the first surface 2A of the battery holder 2 having the outer shape of a box and covers the output lead plate 3A, a second insulating plate that is located on the third surface 2C of the battery holder 2 and covers the intermediate lead plate 3B, a third insulating plate that is located on the second surface 2B of the battery holder 2 and covers the connection terminal 39 in the first output lead plate 3Aa, and a fourth insulating plate that is located on the fourth surface 2D of the battery holder 2 and covers the connection terminal 39 in the second output lead plate 3Ab.

### Exterior Sheet 7

The battery assembly 10 including the insulating plates on the surfaces of the lead plates 3 and the circuit board 4 with its surface covered with the insulator 6 is covered with the exterior sheet 7 as shown in FIG. 1. As shown in FIG. 2, the exterior sheet 7 is a heat-shrinkable bag or tube, and is heated to shrink with the battery assembly 10 inside the exterior sheet 7 to cover the battery assembly 10. The exterior sheet 7 may be formed from a resin with high insulation and high stability such as polyethylene terephthalate (PET). In particular, the heat-shrinkable tube may be an inexpensive PET resin shrink tube. The exterior sheet 7 is melted by the discharged substance such as a high-temperature gas discharged from safety valves of the first electrodes 11A in the battery cells 1, causing the discharged substance to be promptly discharged out of the battery pack 100.

### Lead Wire 18 and Connector 19

The battery pack 100 shown in FIGs. 1 to 5 includes multiple lead wires 18 connected to the circuit board 4 and extending outside the battery assembly 10. The lead wires 18 include positive and negative power lines and signal lines and are directly connected to a connector in a device in which the battery pack 100 is installed. The multiple lead wires 18 each have one end connected to the circuit board 4 and the other end connected to a connector 19.

The battery pack 100 described above is assembled in the processes described below.
(1) The battery cells 1 are arranged in position in the first divisional holder 2X and the second divisional holder 2Y, and the first divisional holder 2X and the second divisional holder 2Y are joined. The first divisional holder 2X and the second divisional holder 2Y are joined with the battery cells 1 received in the battery compartments 21. The first divisional holder 2X and the second divisional holder 2Y are joined in position with the incorporated battery cells 1. Further, the first divisional holder 2X and the second divisional holder 2Y are joined not to separate with the engagement components facing each other in the first divisional holder 2X and the second divisional holder 2Y. With the first divisional holder 2X and the second divisional holder 2Y being joined, the first insertion spaces 14X in the first divisional holder 2X and the second insertion spaces 14Y in the second divisional holder 2Y are linearly aligned to define the insertion spaces 14 for the heat-resistant plates 13.
(2) The heat-resistant plates 13 are arranged in position in the insertion spaces 14 defined by the first divisional holder 2X and the second divisional holder 2Y joined together. The heat-resistant plates 13 are inserted into the insertion spaces 14 defined in the partition walls 22 in the first divisional holder 2X and the second divisional holder 2Y being joined through the insertion openings 15, which are open ends of the first insertion spaces 14X in the first divisional holder 2X, and are arranged in position inside the partition walls 22.
   The heat-resistant plates 13 are inserted into the insertion spaces 14 while deforming elastically to curve in the width direction (refer to FIG. 10) or while elastically deforming the pressing protrusions 17 protruding from the facing surfaces 16 in the insertion spaces 14, and held in position in the insertion spaces 14 while deforming elastically or while being elastically pressed by the elastically deforming pressing protrusions 17.
(3) The lead plates 3 are connected to the end face electrodes 11 in the battery cells 1 exposed through the opposite end faces of the battery holder 2 to electrically connect all the battery cells 1 accommodated in the battery holder 2 to each other. The lead plates 3 are electrically connected and fixed to the end face electrodes 11 in the battery cells 1 by welding.
(4) The circuit board 4 is joined to the battery holder 2 in position. The battery holder 2 shown in FIG. 3 includes the accommodation area 25 on its upper surface. The circuit board 4 is placed in position in the accommodation area 25.
(5) The connection terminals 39 extending from the lead plates 3 are electrically connected to the circuit board 4 joined to the battery holder 2. The connection terminals 39 are arranged in position on the circuit board 4 and electrically connected and physically joined to the circuit board 4 by, for example, spot welding. The lead wires 18 connected to the circuit board 4 extend outside, and the upper surface of the battery holder 2 is covered with the insulator 6 for insulation. The surfaces of the lead plates 3 on the surface of the battery holder 2 are covered with insulating sheets (not shown) for insulation. Through the above processes, the battery assembly 10 is manufactured as shown in FIG. 2.
(6) The battery assembly 10 is covered with the exterior sheet 7. As shown in FIG. 2, the exterior sheet 7 is a heat-shrinkable bag or tube, and is heated to shrink with the battery assembly 10 inside the exterior sheet 7 to cover the battery assembly 10.

The battery pack 100 described above is incorporated in an electrical device, such as a speaker, and used as a power supply. The battery pack 100 provides power to the electrical device using the lead wires 18 extending outside or receives power from the electrical device to charge its internal battery cells 1. The lead wires 18 extending from the battery pack 100 are connected to a connection connector in the electrical device with the output connector 19 connected to the ends of the lead wires 18 to provide power.

### INDUSTRIAL APPLICABILITY

The battery pack according to one or more embodiments of the present invention may be suitably used as a power supply for electrical devices such as wireless speakers, vacuum cleaners, and power tools. The battery pack may also be used for, for example, a power supply device for movable bodies such as assisted bicycles and electric carts as appropriate.

### REFERENCE SIGNS LIST

- 100: battery pack
- 1: battery cell
- 1X: parallel unit
- 1Y: battery block
- 2: battery holder
- 2X: first divisional holder
- 2Y: second divisional holder
- 2A: first surface
- 2B: second surface
- 2C: third surface
- 2D: fourth surface
- 3: lead plate
- 3A: output lead plate
- 3Aa: first output lead plate
- 3Ab: second output lead plate
- 3B: intermediate lead plate
- 4: circuit board
- 6: insulator
- 7: exterior sheet
- 10: battery assembly
- 11: end face electrode
- 11A: first electrode
- 11B: second electrode
- 13: heat-resistant plate
- 14: insertion space
- 14X: first insertion space
- 14Y: second insertion space
- 14A: holding space
- 14B: enlarged space
- 15: insertion opening
- 16: facing surface
- 16A: first facing surface
- 16B: second facing surface
- 17: pressing protrusion
- 17A: first protrusion
- 17a: slope
- 17x: ridge
- 17B: second protrusion
- 17b: slope
- 18: lead wire
- 19: connector
- 20: holding cylinder
- 21: battery compartment
- 22: partition wall
- 23: retaining wall
- 24: connection window
- 25: accommodation area
- 26: end face plate
- 27: engagement hook
- 28: engagement portion
- 31: stack portion
- 33: weld
- 38: plate-like stack portion
- 39: connection terminal
- 41: fuse
- 901: battery cell
- 902: battery holder
- 913: plate
- 914: insertion space
- 916: facing surface
- 917: ridge
- 922: partition wall
- 923: retaining wall

## Claims

1. A battery pack, comprising:
a plurality of battery cells;
a battery holder holding the plurality of battery cells arranged parallel to each other, the battery holder including a partition wall between adj acent battery cells of the plurality of battery cells; and
a heat-resistant plate inside the partition wall of the battery holder and between adjacent battery cells of the plurality of battery cells,
wherein the partition wall includes a pair of retaining walls facing respective adjacent battery cells of the plurality of battery cells, and an insertion space receiving the heat-resistant plate in position between the pair of retaining walls,
the pair of retaining walls have facing surfaces facing the heat-resistant plate received in the insertion space, and include pressing protrusions each pressing the heat-resistant plate on the facing surfaces,
in a cross section of the partition wall, the pressing protrusions include
a pair of first protrusions spaced from each other in a width direction on one of the facing surfaces, and
a second protrusion located between the pair of first protrusions on the other of the facing surfaces, and
the heat-resistant plate is held in position in the insertion space with the heat-resistant plate in the insertion space or the pressing protrusions deforming elastically to cause the pair of first protrusions and the second protrusion to press the heat-resistant plate from opposite sides of the heat-resistant plate.

2. The battery pack according to claim 1, wherein
the battery holder has the insertion space extending through the partition wall in a longitudinal direction of the plurality of the battery cells, and
the pressing protrusions on the facing surfaces are located in a middle portion of the insertion space in a longitudinal direction of the insertion space, and the insertion space has an open end being an insertion opening through which the heat-resistant plate is received.

3. The battery pack according to claim 2, wherein
the battery holder includes two divisional holders separated at a middle position of the plurality of battery cells in the longitudinal direction, and
one of the two divisional holders includes the insertion opening at one end of the insertion space and the pressing protrusions at another end of the insertion space.

4. The battery pack according to claim 1, wherein
the insertion space includes a holding space in which the pressing protrusions are located and enlarged spaces on opposite sides of the holding space, and the enlarged spaces are wider than the holding space, and
the holding space has a narrower lateral width than the heat-resistant plate, and the heat-resistant plate includes opposite end portions received in the enlarged spaces.

5. The battery pack according to claim 2 or claim 3, wherein
each of the pair of first protrusions and the second protrusion includes a slope being lower toward the insertion opening.

6. The battery pack according to claim 2 or claim 3, wherein
the pair of first protrusions are ridges extending in the longitudinal direction of the insertion space, and
each of the ridges includes a slope being lower toward the insertion opening.
